# EUROPÄISCHE PATENTANMELDUNG

(11) **EP 0 897 053 A1**
(43) Veröffentlichungstag der Anmeldung: **17.02.1999**
(21) Anmeldenummer: 98109587.0
(22) Anmeldetag: 27.05.1998
(51) Int. Cl.: F02D 9/02, F02D 11/10

(54) **Anordnung einer Klammerfeder**

(30) Priorität: 13.08.1997 DE 19735046
(71) Anmelder: Pierburg Aktiengesellschaft, 41460 Neuss (DE)
(72) Erfinder: Schröder, Thomas, 12589 Berlin (DE)

(57) **Zusammenfassung**

Mit einer bekannten Anordnung bei einem Drosselklappenstutzen einer Brennkraftmaschine treten Drehzahlschwankungen auf.

Die neue Anordnung weist daher die Merkmale auf, daß der Federschenkel (3) in Ruhestellungsposition durch schräge Anschlagflächen (8, 9) des Gehäuse- und Hebelansatzes (5 und 6) so gehalten ist, daß eine Anlage des Federschenkels (3) an parallel zur Hebeldrehachse (10) bestehende Anschlagflächen (11, 12) des Gehäuse-und und Hebelansatzes (5 und 6) erst bei Verstellung des Hebelansatzes (6) bzw. der Drosselklappe (7) aus Ruhestellungsposition erfolgen kann, wobei der andere Federschenkel (4) durch die nur parallel zur Hebeldrehachse (10) bestehenden Anschlagflächen (11, 12) des Gehäuse- und Hebelansatzes (5 und 6) gehalten ist.

Mit der erfindungsgemäßen Ausführung können größere Fertigungstoleranzen gewählt werden, die eine vorteilhafte Fertigung begünstigen. Die Anordnung verbessert die Funktion des Drosselkappenstutzen.

## Beschreibung

Die Erfindung betrifft eine Anordnung einer Klammerfeder bei einem Drosselklappenstutzen für die Brennluftsteuerung einer Brennkraftmaschine nach dem Oberbegriff des Patentanspruchs 1.

Eine derartige Anordnung ist aus der EP 0 651 147 B1 bekannt Diese zeigt einen Drosselklappenstutzen, bei dem eine Klammerfeder mit ihren beiden Federschenkeln einen Motorhebelansatz und einen Gehäuseansatz gemeinsam umklammert, wodurch erreicht wird, daß, wenn der Elektromotorantrieb abgestellt ist oder ausfällt, eine Ruhestellungsposition der Drosseiklappe fixiert wird, die einer Start- bzw. Leerlaufnotstellung entspricht.

Es hat sich nun gezeigt, daß diese Anordnung, bei der in Ruhestellungsposition quasi eine vorspannungsfreie, d. h. verdrehspielbehaftete Position besteht, Drehzahlschwankungen der Brennkraftmaschine in diesem Betriebsbereich auftreten, die als sehr störend empfunden werden.

Die Erfindung basiert auf der Erkenntnis, daß die Drosselklappe durch ihre vorspannungsfreie, verdrehspielbehaftete Position, durch Schwingungen angeregt, verstellt wird und dadurch die Drehzahlschwankungen verursacht.

Hiervon ausgehend liegt der Erfindung die Aufgabe zugrunde, Maßnahmen aufzufinden, mit denen bei einer gattungsgemäßen Anordnung der Klammerfeder Drehzahlschwankungen ausgeschaltet sind.

Diese Aufgabe ist durch die im Kennzeichen des Anspruchs 1 oder 2 angegebenen Merkmale gelöst. Vorteilhafte Weiterbildungen sind in den Unteransprüchen angegeben.

Zwei Ausführungsbeispiele der Erfindung sind in der Zeichnung dargestellt und werden nachfolgend beschrieben.

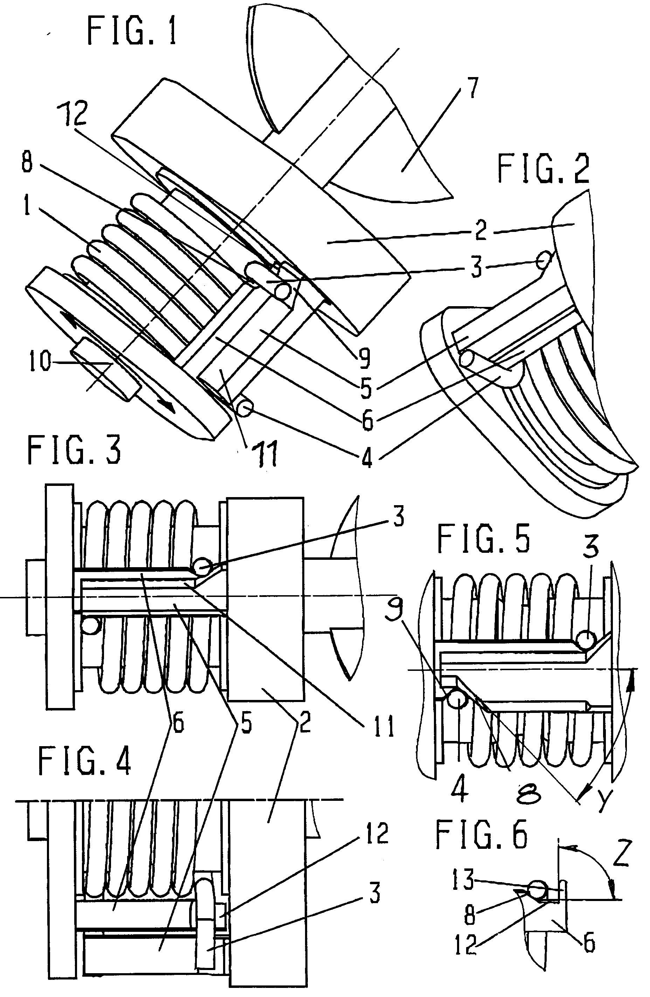

Diese zeigt:
Fig. 1 und 2
   Prinzipdarstellungen der Erfindung an einem Drosselklappenstutzen,
Fig. 3 und 4
   Ansichten gemäß Fig. 1 und 2 als Drauf- und Seitenansicht,
Fig. 5
   eine Ausführung entsprechend der Fig. 1, jedoch mit zwei schrägen Anschlagflächen,
Fig. 6
   eine Ausführung nach Fig. 1. jedoch mit einem Fanghaken.

Fig. 1 zeigt eine Prinzipdarstellung einer Anordnung einer Klammerfeder 1 bei einem Drosselklappenstutzen 2 für die Brennluftsteuerung einer Brennkraftmaschine, bei der beide Federschenkel 3, 4 durch gleichzeitiges Umklammern eines Gehäuse- und eines Hebelansatzes 5 und 6 eine Drosselklappenruhestellungsposition fixieren, aus der der Hebelansatz 6 bzw. die Drosselklappe 7 in beide Stellrichtungen (Pfeil) verstellt werden kann.

Diese Anordnung ermöglicht es, daß, wenn der Elektromotorantrieb abgestellt ist oder ausfällt, die Ruhestellungsposition der Drosselklappe 7 erreicht wird, die einer Start-bzw. Notstellung entspricht.

Erfindungsgemäß ist nun vorgesehen, daß der Federschenkel 3 in Ruhestellungsposition durch schräge Anschlagflächen 8, 9 des Gehäuse- und Hebelansatzes 5 und 6 so gehalten ist, daß eine Anlage des Federschenkels 3 an parallel zur Hebeldrehachse 10 bestehende Anschlagflächen 11, 12 des Gehäuse- und Hebelansatzes 5 und 6 erst bei Verstellung des Hebelansatzes 6 bzw. der Drosselklappe 7 aus Ruhestellungsposition erfolgen kann, wobei der andere Federschenkel 4 durch die nur parallel zur Hebeldrehachse 10 bestehenden Anschlagflächen 11, 12 des Gehäuse- und Hebelansatzes 5 und 6 gehalten ist. Die Ruhestellungsposition ist aus den Fig. 1 bis 3 ersichtlich.

Die Fig. 1 bis 3 zeigen den Federschenkel 3 an den schrägen Anschlagflächen gehalten und mit dem anderen Federschenkel 4 an parallel zur Hebeldrehachse 10 bestehenden Anschlagflächen auf der anderen Seite der Gehäuse- und Hebelansätze 5 und 6. Durch die schrägen Anschlagflächen 8, 9 stützt sich der Federschenkel 3 mit jeweils der halben Federkraft an beiden Anschlagflächen 8, 9 ab und verstellt dadurch den drehbaren Hebelanschlag 6 gegen den durch den anderen Federschenkel 4 auf der anderen Seite des Gehäuse- bzw. Hebelansatzes 5, 6 gebildeten Anschlag.

Damit ist eine spielfreie Ausführung gefunden worden, die eine definierte Ruhestellungsposition der Gehäuse- und Hebelansätze 5 und 6 zueinander mit minimalen Verdrehwinkelabweichungen gewährleistet.

Bei der Verstellung des Hebelansatzes 5 bzw. der Drosselklappe 7 in eine der beiden Verstellrichtungen (Pfeil), gleitet der Federschenkel 3 an einer der schrägen Anschlagflächen 8 oder 9 bis zu einer der parallelen Anschlagflächen 11 oder 12 ab, bei Rückstellung in Ruhestellung drückt diese schräge Anschlagfläche 8 oder 9 den Federschenkel 3 in die Ausgangsstellung zurück.

Eine Positionierung der beiden Federschenkel 3 und 4 durch beiderseits der Gehäuse-und Hebelansätze 5 und 6 angeordnete schräge Anschlagflächen, wie in Fig. 5 dargestellt, ermöglicht größere Bauteiltoleranzen.

Vorteilhafterweise sind die schrägen Anschlagflächen 8, 9 unter einem Winkel Y von 45° ausgehend von den parallel zur Hebeldrehachse 10 bestehenden Anschlagflächen 11, 12 ausgeführt. Der Gehäuse- oder Hebelansatz 5 oder 6 kann mit einem von der parallelen Anschlagfläche 11, 12 unter einem Winkel Z von 90° ausgehenden Fanghaken 13 ausgestattet sein, zur Sicherung der Schenkelfeder, wie in Fig. 5 oder 6 dargestellt ist, in denen der Hebelanschlag 6 als Einzelteil mit den Elementen schräge Anschlagfläche 8, parallele Anschlagfläche 12 und Fanghaken 13 dargestellt ist.

Mit der erfindungsgemäßen Ausführung können größere Fertigungs- und Bauteiltoleranzen gewählt werden, die eine vorteilhafte Fertigung begünstigen. Die verdrehspielfreie Anordnung verbessert die Funktion des Drosselkappenstutzen.

## Patentansprüche

1. Anordnung einer Klammerfeder bei einem Drosselklappenstutzen für die Brennluftsteuerung einer Brennkraftmaschine, bei der beide Federschenkel durch gleichzeitiges Umklammern eines Gehäuse- und eines Hebelansatzes eine Drosselklappenruhestellungsposition fixieren, aus der der Hebelansatz bzw. die Drosselklappe in beide Stellrichtungen (Pfeil) verstellt werden kann, dadurch gekennzeichnet, daß der Federschenkel (3) in Ruhestellungsposition durch schräge Anschlagflächen (8, 9) des Gehäuse- und Hebelansatzes (5 und 6) so gehalten ist, daß eine Anlage des Federschenkels (3) an parallel zur Hebeldrehachse (10) bestehende Anschlagflächen (11, 12) des Gehäuse- und Hebelansatzes (5 und 6) erst bei Verstellung des Hebelansatzes (6) bzw. der Drosselklappe (7) aus Ruhestellungsposition erfolgen kann, wobei der andere Federschenkel (4) durch die nur parallel zur Hebeldrehachse (10) bestehenden Anschlagflächen (11, 12) des Gehäuse-und Hebelansatzes (5 und 6) gehalten ist.

2. Vorrichtung nach dem Oberbegriff des Anspruchs 1, dadurch gekennzeichnet, daß beide Federschenkel (3, 4) in Ruhestellungsposition durch schräge Anschlagflächen (8, 9) des Gehäuse- und Hebelansatzes (5 und 6) so gehalten sind, daß eine Anlage der Federschenkel (3, 4) an parallel zur Hebeldrehachse (10) bestehende Anschlagflächen (11, 12) des Gehäuse- und Hebelansatzes (5 und 6) erst bei Verstellung des Hebelansatzes (6) bzw. der Drosselklappe (7) aus Ruhestellungsposition erfolgen kann.

3. Vorrichtung nach Anspruch 1 oder 2, dadurch gekennzeichnet, daß die schrägen Anschlagflächen (8, 9) unter einem Winkel (Y) von 45° ausgehend von den parallel zur Hebeldrehachse (10) bestehenden Anschlagflächen (11, 12) ausgeführt sind.

4. Vorrichtung nach einem der vorstehenden Ansprüche, dadurch gekennzeichnet, daß der Gehäuse- oder Hebelansatz (5 oder 6) einen von der parallelen Anschlagfläche (11, 12) unter einem Winkel (Z) von 90° ausgehenden Fanghaken (13) aufweist.
